# EUROPEAN PATENT SPECIFICATION

(11) **EP 1 868 473 B1**
(45) Date of publication and mention of the grant of the patent: **27.10.2010**
(21) Application number: 06727766.5
(22) Date of filing: 29.03.2006
(51) Int. Cl.: A47J 31/40

(54) **MACHINE FOR PREPARING BEVERAGES FROM CAPSULE PREPARATIONS AND RELATED INTERCHANGEABLE EXTRACTION UNIT**
MASCHINE ZUR ZUBEREITUNG VON GETRÄNKEN AUS KAPSELZUBEREITUNGEN UND VERWANDTE AUSWECHSELBARE ENTNAHMEEINHEIT
MACHINE POUR PREPARER DES BOISSONS A PARTIR DE PREPARATIONS EN CAPSULES ET UNITE D'EXTRACTION INTERCHANGEABLE ASSOCIEE

(30) Priority: 14.04.2005 IT RM20050181
(43) Date of publication of application: 26.12.2007
(73) Proprietor: Cafè do Brasil S.p.A., 80129 Napoli (IT)
(72) Inventor: RUBINO, Michele Cafè Do Brasil S.p.a., I-80129 Napoli (IT)
(74) Representative: Papa, Elisabetta
(86) International application number: PCT/IB2006/050952
(87) International publication number: WO 2006/126104

(56) References cited:
- EP-A- 1 510 160
- EP-A2- 1 477 092
- WO-A-2005/016093
- ES-A1- 2 226 531
- US-A- 4 787 299

## Description

The present invention relates to a machine for preparing beverages such as coffee and the like from capsule preparations containing a substantially granular infusion and to a related interchangeable extraction unit.

There are several known types of machines for preparing hot beverages such as coffee, tea, chocolate and the like from a single-dose capsule or wafer, typically pre-metered, containing a preparation in the form of a substantially granular infusion. Such machines provide the capsule to be passed through by a liquid, typically water and/or milk, at a certain temperature and pressure, thereby obtaining, outlet from the capsule, the end beverage. This preparing process is commonly referred to as "extraction" of the beverage from the capsule.

Said machines are typically used in offices and workplaces in general. An example of a prior art machine can be found in WO 2005/016093 A1.

One of the drawbacks of such machines is that each machine design can work solely with a specific type of capsule. Evidently, this limits the versatility of the machine itself in terms of types of dispensable beverages and of adaptability to different supplies, e.g. single-dose capsules made of different materials, such as paper, plastics, aluminium. Such a drawback entails the need to have plural different machines available and, potentially, a higher replacement rate of each machine when consumers' needs or preferences have changed.

Hence, the technical problem set and solved by the present invention is to provide a machine for preparing beverages of the aforementioned type overcoming the drawbacks hereto mentioned with reference to the known art.

Such a problem is solved by a machine according to claim 35 and by an interchangeable extraction unit according to claim 1.

Preferred features of the present invention are present in the dependent claims thereof.

In the present context, the terms wafer, capsule and single-dose will be utilized without distinction to denote any element containing a beverage preparation in the form of an infusion.

The present invention provides several relevant advantages. The main advantage lies in that the machine of the invention, by housing different extraction units, concomitantly or one at a time, allows to employ capsules of different type in a same apparatus, thereby being extremely versatile.

Other advantages, features and the operation modes of the present invention will be made apparent from the following detailed description of some embodiments thereof, given by way of a non-limiting example. Reference will be made to the figures of the annexed drawings, wherein:
- Figures- 1A and 1B show a cross-sectional view and a top plan view, respectively, of a capsule support of a first embodiment of the extraction unit according to the present invention;
- Figure 1C and 1D show a cross-sectional view and a top plan view, respectively, of an element for collecting the extraction unit of Figures 1A and 1B;
- Figures 1E and 1F show an exploded view and a perspective view of the extraction unit of Figures 1A and 1B in an assembled configuration within a machine for preparing beverages according to the present invention;
- Figure 1G shows a further example of capsule that can be employed with the unit of Figures 1A-1F;
- Figures 2A and 2B show a cross-sectional view and a top plan view, respectively, of a capsule support of a second embodiment of the extraction unit according to the present invention;
- Figures 2C and 2D show a cross-sectional view and a top plan view, respectively, of an element for collecting the extraction unit of Figures 2A and 2B;
- Figure 2E shows an example of capsule that can be used with the unit of Figures 2A-2D;
- Figures 3A and 3B show a cross-sectional view and a top plan view, respectively, of a capsule support of a third embodiment of the extraction unit according to the present invention;
- Figures 3C and 3D show a cross-sectional view and a top plan view, respectively, of an element for collecting the extraction unit of Figures 3A and 3B;
- Figures 4A and 4B show a cross-sectional view and a top plan view, respectively, of a capsule support of a fourth embodiment of the extraction unit according to the present invention;
- Figures 4C and 4D show a cross-sectional view and a top plan view, respectively, of an element for collecting the extraction unit of Figures 4A and 4B;
- Figure 4E shows an example of capsule that can be used with the unit of Figures 4A-4D;
- Figures 5A and 5B show a cross-sectional view and a top plan view, respectively, of a capsule support of a fifth embodiment of the extraction unit according to the present invention;
- Figures 5C and 5D show a cross-sectional view and a top plan view, respectively, of an element for collecting the extraction unit of Figures 5A and 5B;
- Figures 5E and 5F show each an example of capsule that can be used with the unit of Figures 5A-5D;
- Figures 6A and 6B show a perspective view and a top plan view, respectively, of a component of a machine for preparing beverages according to the present invention, suitable for use with an extraction unit according to any one of the embodiments of the latter shown in the preceding figures;
- Figures 7A, 7B and 7C show each a cross-sectional view of a workgroup of the machine of Figure 6A-6B in a respective configuration suitable for use with a specific extraction unit; and
- Figure 8 shows a schematic representation of a machine according to the invention, with the workgroup of Figures 7A-7C working with the extraction unit of Figure 1A.

As mentioned above, the present invention relates to a machine for preparing beverages, such as coffee and the like, from a substantially granular infusion in capsules and to a related beverage extraction unit suitable for use with such a machine. The main peculiarity of such a machine is to allow the use of capsules of different type, and this thanks to its option of housing beverage extraction units of different type.

The machine of the invention will hereinafter be described with reference to an embodiment based on interchangeable extraction units that may be removably housed therein, each suitable for use of a related capsule type. Therefore, in said embodiment the machine is apt to house one specific extraction unit at a time.

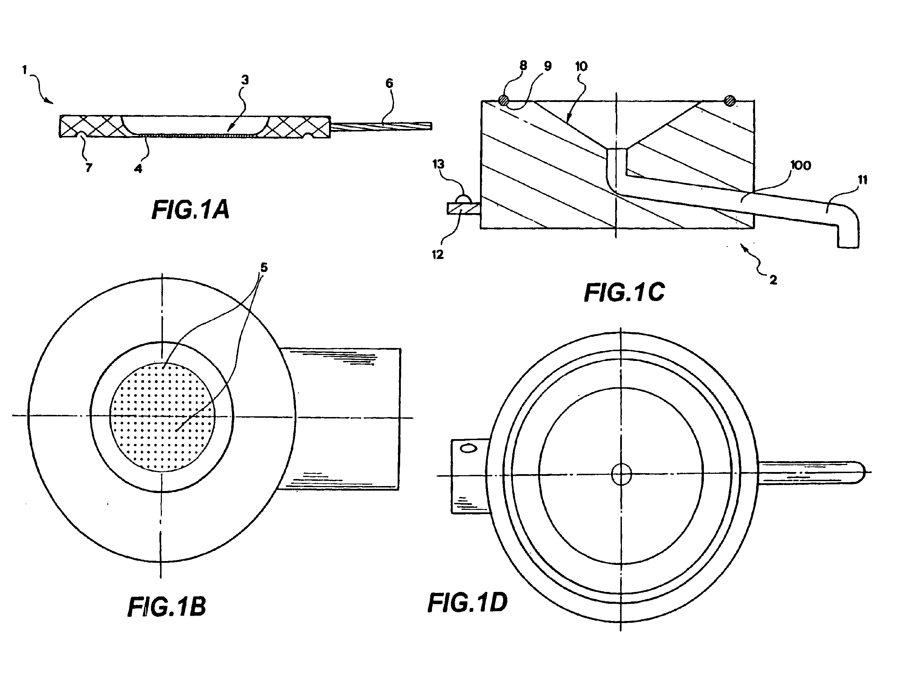

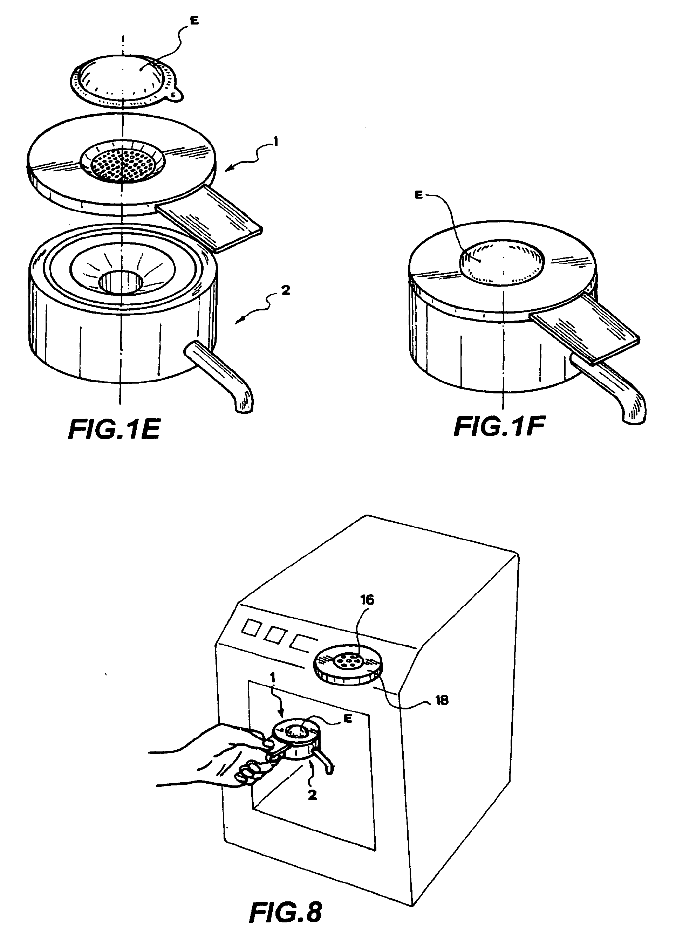

A first embodiment of the interchangeable extraction unit of the invention is shown in Figures 1A to 1F and is contrived for use of coffee-containing disposable paper single-dose wafers, of the type known by those skilled in the art as "ESE". One such wafer is depicted just in Figure1E-1F and denoted by E.

Such an extraction unit comprises a main body made up of a capsule (or cartridge) support 1 that, as it will be detailed hereinafter, is apt to be coupled with liquid-supplying means of the machine so that the liquid may pass through the wafer, thereby causing the extraction of the beverage, and a collecting element 2, apt to convey said liquid beverage to the consumer.

According to the invention, support 1 and element 2 are interchangeable with other extraction units, and for this purpose apt to be removably received in a respective housing of the machine by mechanical coupling modes perfectly within the reach of a person skilled in the art. Hence, it is provided that such components be physically extracted and replaced when the type of capsule/wafer treated in the machine has to be replaced.

The support 1 and the collecting element 2 are apt to be coupled, in particular with the former overlapped to the latter. Both such components may be made of metal and/or plastics.

With particular reference to Figures 1A and 1B, the capsule support 1 comprises a shaped capsule seat 3 having sidewalls with rounded corners and just apt to entirely or partially receive the wafer. Bottomwise, the seat 3 is delimited by a support base 4 bearing a plurality of perforations 5 uniformly distributed and apt to filter the liquid beverage extracted from the wafer itself.

In the present embodiment it is provided that the capsule support 1 may be partially or totally extracted from the machine by the consumer to allow the introduction of the wafer. For this purpose, it comprises an extraction arm 6, apt just to be grabbed by a user.

Bottomwise, the support 1 has a gasket seat 7 to allow its coupling to the collecting element 2 by interposition of an annular gasket 8, the latter shown in Figure 1C.

With particular reference to Figure 1C and 1D, in the present embodiment the collecting element 2 is contrived to remain normally inserted in the machine and to be extracted solely in case it is desirable to replace it, jointly to the support 1, with a different extraction unit suitable for use of capsules/wafers of different type.

The collecting element 2 in turn comprises its own annular seat 9 for receiving the annular gasket 8, said seat being arranged at a top face of the element itself apt to abut on a corresponding bottom face of the support 1.

Moreover, the element 2 has a funnel-shaped conveyor 10 obtained internally to the element itself and with a mouth on said top face, which has an oblique bottom duct 100 and that is apt to supply the liquid beverage to the consumer by a bottom supply tube or spout 11, the latter being the continuation of the duct 100.

The element 2 further comprises a lateral appendix 12 onto which it is applied identifying means 13 for identifying the type of capsule/wafer or of capsules/wafers that the extraction unit at issue is apt to receive. In the present embodiment, such means 13 comprises a mechanical identifier, it also denoted by 13, which is apt to cooperate with a corresponding means of the machine in order to enable the desired identifying.

Evidently, alternative embodiments may provide a different implementation of the identifying means, based, e.g., on electronic components.

During use in the machine for preparing beverages, the capsule support 1 cooperates with the abovementioned means for supplying an extraction liquid, typically water and/or milk, so that the liquid may pass through the wafer (capsule) for beverage extraction.

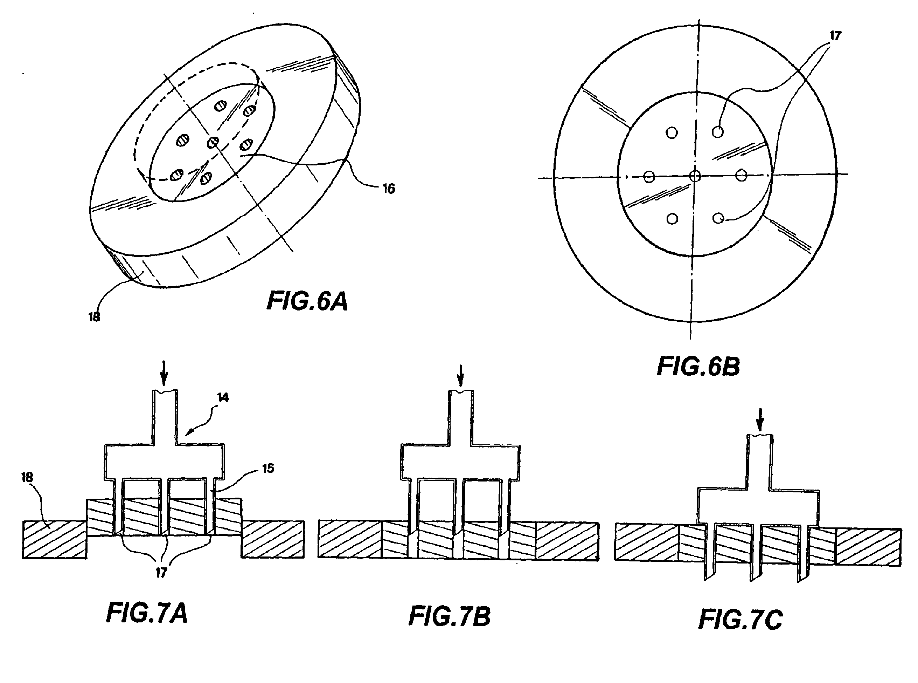

With reference to Figures 6A-6B and 7A-7C, in the present embodiment such liquid-supplying means of the machine comprises a hollow punching element 14, or ram, connected to an intake of water, milk and/or another extraction liquid. The punching element 14 carries a plurality of punches 15, in particular seven, apt to punch, if need be, the capsule/wafer received in the support 1. For this purpose, the punching element 14 is slidable in a direction substantially orthogonal to the support 1 between a punching position, shown in Figure 7C, and a non-punching position, shown in Figures 7A and 7B.

The punching element 14 cooperates with another movable element, in particular a disc 16, bearing suitable guide seats 17 for the punches 15 and it also slidable in a direction substantially orthogonal to the support 1 so as to adapt the configuration of the machine to the height of the capsule/wafer treated, as shown in Figures 7A and 7B, which illustrate each just a possible position of the disc 16. In general, the disc 16 is apt to assume different operative positions according to the dimensions and/or configuration of the capsule/wafer.

Moreover, the liquid-supplying means comprises a stationary guide 18 for the sliding of the disc 16, which is in the form of a circular crown circumscribed to the disc itself.

Also the components of the hereto-described supplying means may be made of metal and/or plastics.

In short, in the present embodiment the liquid-supplying means can assume three configurations, i.e.:
- a first non-punching configuration, shown in Figure 7A, corresponding to a retracted position both of the disc 16 and the ram 14: thus, it is created a housing for specific types of capsules/wafers requiring no punching by the punches 15;
- a second non-punching configuration, shown in Figure 7B, corresponding to a retracted position of the ram 14 and to an advanced position of the disc 16: thus, the latter forms a single surface aligned with the external circular crown 18, while the retracted punches 15 do not punch the capsule/wafer;
- a punching configuration, shown in Figure 7C, corresponding to an advanced configuration both of the ram 14 and of the disc 16: thus, the latter forms a single surface aligned with the external circular crown 18, while the punches 15 punch the capsule/wafer.

The liquid-supplying means, and in particular the disc 16 and optionally the guide 18, are coupled to the capsule support 1 by interposition of sealing means, e.g. an annular gasket analogous to that already described hereto.

Hence, the operation of the machine provides that the type of capsule/wafer to be treated be identified thereby with the means 13 for identifying the collecting element 2 and that accordingly there be automatically adjusted the operative parameters of the machine itself, like, e.g., quantity, temperature and pressure of the extraction liquid that should be employed, position of the movable disc 16 and position of the punching element 14, i.e., need, or lack thereof, that the capsule/wafer be punched.

With reference also to Figure 8, in the case of the extraction unit described with reference to Figures 1A-1D, the configuration of the liquid-supplying means of the machine will be that of Figure 7A and the extraction liquid will be delivered preferably with a pressure equal to about 12 bars and a temperature equal to about 85 °C.

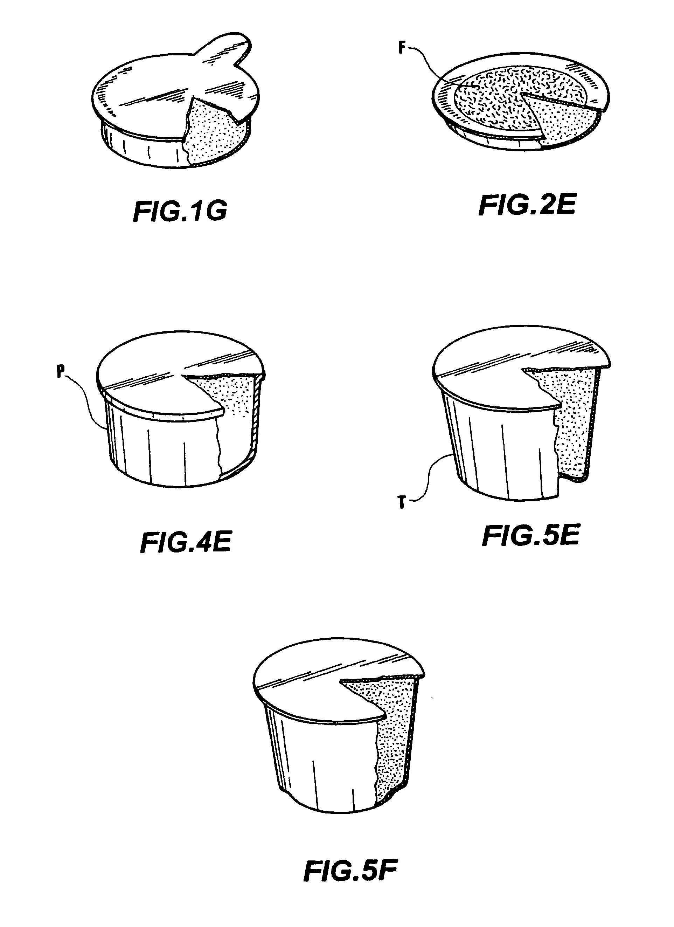

The same extraction unit just described above, optionally with an adaptation of the dimensions thereof, may receive also a hard paper wafer, shown in Figure 1G.

Hereinafter, there will be described further embodiments of the extraction unit of the invention, interchangeable with the unit of the first embodiment illustrated above and apt to cooperate with the liquid-supplying means, it also described above. For simplicity's sake, such further embodiments will be described only with regard to the aspects differentiating them from said first embodiment. Moreover, alike or analogous components will be denoted in the figures by the same number reference already employed.

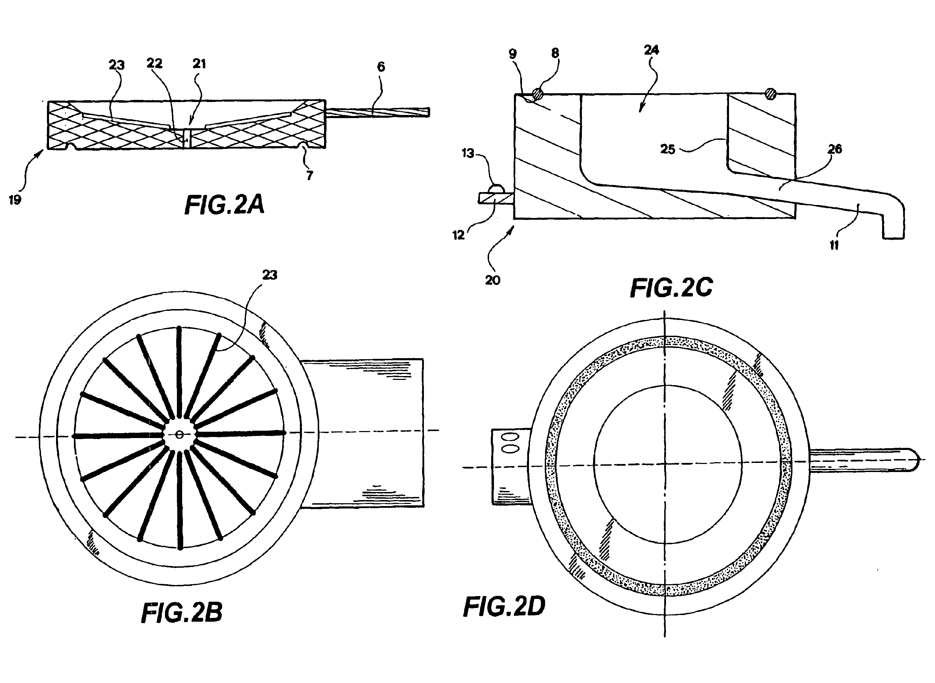

With reference to Figures 2A to 2D, according to a second embodiment the extraction unit is contrived for use with a soft paper wafer like a coffee filter, schematically depicted in Figure 2E and denoted by F. The extraction unit comprises in this case as well a main body made up of a capsule support and a collecting element, in this case denoted by 19 and 20, respectively, coupled in the manner already described.

With particular reference to Figures 2A and 2B, the support 19 has a shaped capsule seat 21 having a bottom base with walls converging to a central channel 22, said base providing in particular a substantially conical geometry. On said bottom base there are obtained a plurality of transversal, and specifically radial, channels 23, uniformly distributed and apt to filter the beverage into the collecting element 20. By virtue of the geometry of the bottom base, the channels 23 are with a substantially oblique development.

With particular reference now to Figures 2C and 2D, in the present embodiment the collecting element 20 has a conveyor 24 obtained internally to the element itself and having a top portion 25 with a substantially cylindrical geometry ending in an oblique supply duct 26.

In the case of this extraction unit, the configuration of the liquid-supplying means of the machine will be that of Figure 7B and the extraction liquid will be delivered preferably with a pressure equal to about 2 bars and a temperature equal to about 85 °C.

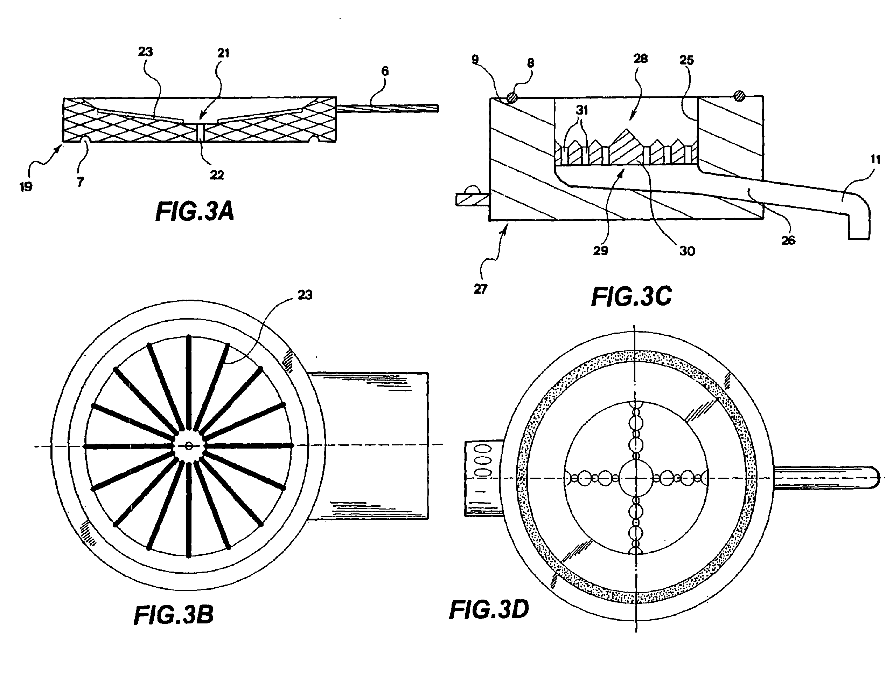

With reference to Figures 3A to 3D, according to a third embodiment the extraction unit is contrived for use with a coffee cream-like soft paper wafer, analogous to that schematically depicted in Figure 2E. In this case as well, the extraction unit comprises a main body made up of a capsule support analogous to that of the second embodiment and therefore denoted by the same number references already employed and a collecting element, in this case denoted by 27, coupled in the manner already described.

With reference in particular to Figures 3C and 3D, in the present embodiment the collecting element 27 has a conveyor 28 obtained internally to the element itself and having a top portion 25 with a substantially cylindrical geometry ending in an oblique supply duct 26 analogous to those of the second embodiment. Within said cylindrical portion 25 there is housed transversally arranged emulsifying means 29, and in particular a substantially cross-shaped body bearing an alternance of point-shaped elements 30 and passage channels 31. The function of such means 29 is to enrich the air mixture, thereby allowing foam formation.

Also in the case of this extraction unit, the configuration of the liquid-supplying means of the machine will be that of Figure 7B, whereas the extraction liquid will preferably be delivered with a pressure equal to about 5 bars and with a temperature equal to about 85°C.

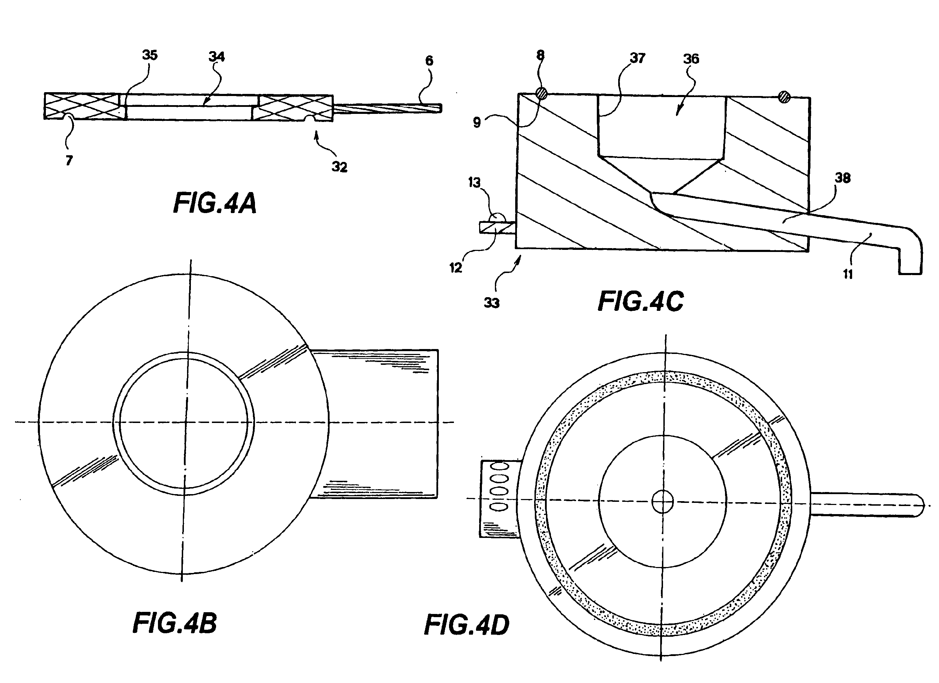

With reference to Figures 4A to 4D, according to a fourth embodiment the extraction unit is contrived for use with a polypropylene capsule, schematically depicted in Figure 4E and denoted by P. In this case as well, the unit comprises a main body made up of a capsule support and a collecting element, in this case denoted by 32 and 33, respectively, coupled in the manner already described.

With particular reference to Figures 4A and 4B, the support 32 has a through capsule seat 34, open bottomwise as well as topwise and shaped so that the bottom base of the capsule itself abuts on an abutment edge 35.

With particular reference now to Figures 4C and 4D, in the present embodiment the collecting element 33 comprises a funnel-shaped conveyor 36 obtained internally thereto and having a top portion 37 with a substantially cylindrical geometry ending in an oblique supply duct 38.

In the case of this extraction unit, the configuration of the liquid-supplying means of the machine will be that of Figure 7B and the extraction liquid will be delivered preferably with a pressure equal to about 15 bars and a temperature equal to about 85 °C.

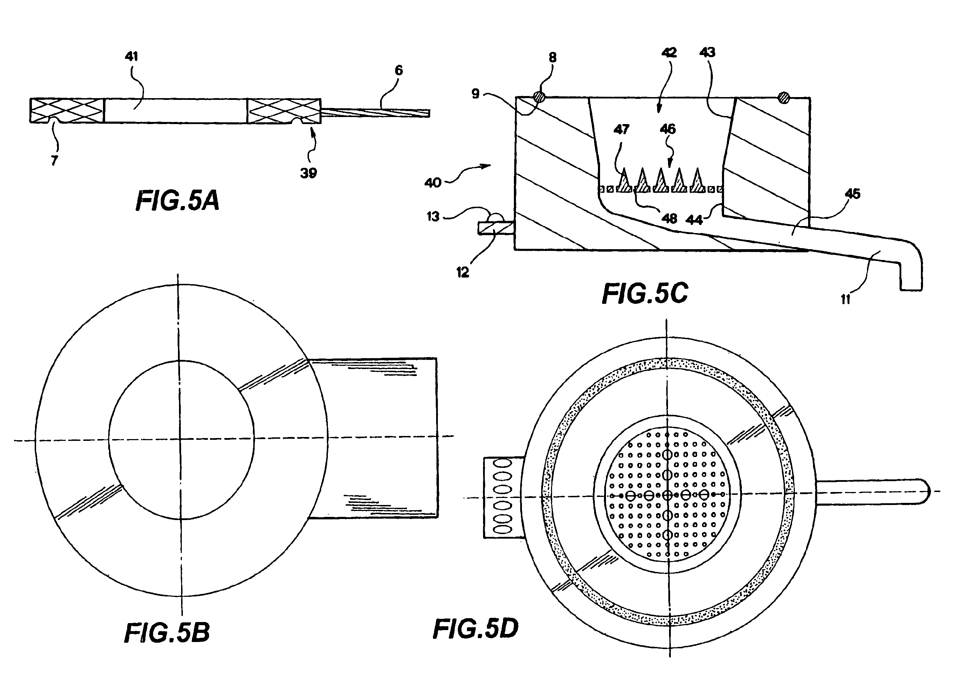

With reference to Figures 5A to 5D, according to a fifth embodiment the extraction unit is contrived for use with a capsule of thermoformed or extruded plastics material, schematically depicted in Figure 5E and denoted by T. In this case as well, the unit comprises a main body made up of a capsule support and a collecting element, in this case indicated by 39 and 40, respectively, coupled in the manner already described.

With particular reference to Figures 5A and 5B, the support 39 has a through capsule seat 41 with a substantially tubular cylindrical geometry.

With particular reference now to Figure 5C and 5D, in the present embodiment the collecting element 40 comprises a funnel-shaped conveyor 42 obtained internally to the element itself and having a top portion 43 with a substantially conical geometry and a bottom portion 44 with a substantially cylindrical geometry, ending bottomwise in an oblique supply duct 45. Within said cylindrical portion 44 there is transversally received emulsifying means 46, and in particular a disc bearing point-shaped elements 47, arranged substantially cross-like, and a plurality of passage channels 48 distributed over the entire surface of the disc. Such means 46 has the same emulsifying function of the abovementioned means 29, and moreover allows the punching of the capsule.

In the case of this extraction unit, the configuration of the liquid-supplying means of the machine will be that of Figure 7C and the extraction liquid will preferably be delivered with a pressure equal to about 15 bars and with a temperature equal to about 85 °C.

This same extraction unit, optionally with an adaptation of the dimensions thereof, is apt to receive also a rigid sealed aluminium capsule, shown in Figure 5F.

It will be understood that even though the extraction unit of the invention has hereto been described with reference to single-dose capsules or cartridges, it may advantageously be employed also with multiple-dose capsules and, more generally, with any type of capsule or wafer requiring a process for extracting a beverage by an extraction liquid.

Moreover, it will be understood that the abovedescribed capsule support and collecting element may also be made integral or fixed the one to the other. In that case, they could both be extractable to allow the introduction of a capsule.

In addition, the extraction unit or the machine for preparing beverages may provide filtering means different from those described above, optionally arranged also at the level of the collecting element.

Concerning the machine of the invention, an embodiment alternative to the one given above provides various extraction units to be permanently received into suitable housing means of the machine itself and that, if need be, the replacement of the one with the other one be carried out directly by the machine, following a user's input or an automatic recognizing of the capsule used, e.g., based on the color of the latter. In that case, each extraction unit could be movable between an operative position, in which it is brought when the machine identifies the type of capsule corresponding to said extraction unit, and a quiescent position. Such a motion of the extraction unit may e.g. be attained by mounting the latter on a revolving carousel.

Moreover, alternative embodiments could provide the capsule support of the extraction unit to be not manually extracted by a consumer, but laid directly by a suitable mechanism of the machine, automatically adapting to the single-dose loaded. Of course, the abovementioned specific circular configuration of the capsules/wafers should not be construed as limitative in any way.

The present invention has hereto been described with reference to preferred embodiments thereof. It is understood that there may be other embodiments referable to the same inventive kennel, all falling within the protective scope of the claims hereinafter.

## Claims

1. An extraction unit for use in a machine for preparing beverages such as coffee and
the like, apt to the extraction of a beverage from a capsule (E; F; P; T) containing a preparation in the form of a substantially granular infusion, comprising:
- a main body (1, 2; 19, 20; 19, 27; 32, 33; 39, 40) having a seat (3; 21; 34; 41) apt to receive the capsule, which main body (1, 2; 19, 20; 19, 27; 32, 33; 39, 40) is apt to be removably introduced in a corresponding housing of the machine so that an extraction liquid such as water or the like delivered by the machine itself may pass through the capsule, which main body comprises a collecting element (2; 20; 27; 33; 40) for collecting the liquid beverage extracted from the capsule, apt to convey said beverage to a consumer; and
- means (13) for identifying the type of capsule or capsules that the unit is apt to receive, which identifying means (13) is arranged at said collecting element (2; 20; 27; 33; 40),
wherein said unit is interchangeable so as to allow the use of capsules of different type in a same machine.

2. The extraction unit according to claim 1, wherein said capsule seat (3; 21; 34; 41) is apt to receive a single-dose capsule.

3. The extraction unit according to claim 1 or 2, wherein said capsule seat (3; 21; 34; 41) is apt to receive a disposable capsule.

4. The extraction unit according to any one of the preceding claims, wherein said capsule seat (3) has rounded sidewalls.

5. The extraction unit according to any one of the preceding claims, wherein said capsule seat (21) has a support base of the capsule with walls substantially converging towards a delivering hole (22) for delivering the beverage extracted by the capsule itself.

6. The extraction unit according to any one of the preceding claims, wherein said capsule seat (21) has a support base of the capsule with a substantially conical geometry.

7. The extraction unit according to any one of the preceding claims, wherein said capsule seat (34) has a bottom abutment edge (35) onto which the capsule itself abuts.

8. The extraction unit according to any one of the preceding claims, wherein said capsule seat (41) has a substantially tubular configuration, being open bottomwise and topwise.

9. The extraction unit according to any one of the preceding claims, wherein said capsule seat (41) has a substantially cylindrical geometry.

10. The extraction unit according to any one of the preceding claims, wherein said identifying means comprises a mechanical identifier (13).

11. The extraction unit according to any one of the preceding claims, wherein said identifying means (13) comprises an electronic identifier.

12. The extraction unit according to any one of the preceding claims, wherein said main body comprises a capsule support (1; 19; 32; 39) having said capsule seat (3; 21; 34; 41) and apt to cooperate with means (14, 16, 18) for delivering the extraction liquid of the machine so that said liquid may pass through the capsule.

13. The extraction unit according to the preceding claim, wherein said capsule support (1; 19; 32; 39) is apt to be partially or totally extracted from the machine to allow the introduction of the capsule.

14. The extraction unit according to the preceding claim, wherein said capsule support (1; 19; 32; 39) has an extraction arm (6) apt to be grabbed by a user.

15. The extraction unit according to any one of the preceding claims, wherein said collecting element (2; 20; 27; 33; 40) comprises a substantially funnel-shaped conveyor (10; 24; 28; 36; 42).

16. The extraction unit according to any one of the preceding claims, wherein said collecting element (2; 20; 27; 33; 40) comprises a substantially tubular conveyor (100, 11; 26, 11; 38, 11; 45, 11).

17. The extraction unit according to any one of the preceding claims, wherein said collecting element (2; 20; 27; 33; 40) is apt to be removably received in the machine so as to have to be extracted only to be replaced with another analogous element suitable for use with capsules of a different type.

18. The extraction unit according to any one of the preceding claims, wherein said collecting element (2; 20; 27; 33; 40) has a lateral appendix (12) receiving said identifying means (13).

19. The extraction unit according to any one of claims 13 to 15, wherein said collecting element (2; 20; 27; 33; 40) and said capsule support (1; 19; 32; 39) are apt to cooperate the one with the other one for extracting the beverage and for the supplying thereof to the user, the former one being arranged or apt to be arranged bottomwise to the latter one.

20. The extraction unit according to the preceding claim, wherein said collecting element (2; 20; 27; 33; 40) and capsule support (1; 19; 32; 39) are coupled at respective end faces thereof.

21. The extraction unit according to claim 19 or 20, wherein said collecting element (2; 20; 27; 33; 40) and capsule support (1; 19; 32; 39) are coupled by interposition of a sealing element (8).

22. The extraction unit according to any one of the preceding claims, comprising means (5; 23) for filtering the liquid beverage extracted from the capsule.

23. The extraction unit according to the preceding claim, wherein said filtering means comprises a plurality of perforations (5) arranged at a support base (4) of said capsule seat (3).

24. The extraction unit according to claim 22 or 23, wherein said filtering means comprises a plurality of transversal filtering channels (23) arranged at a base of said capsule seat (21).

25. The extraction unit according to the preceding claim, wherein said filtering channels (23) have a substantially radial arrangement.

26. The extraction unit according to claim 24 or 25, wherein said filtering channels (23) have a substantially oblique development.

27. The extraction unit according to any one of claims 22 to 26, wherein said filtering means is arranged at said collecting element.

28. The extraction unit according to any one of the preceding claims, comprising emulsifying means (29; 46) to enrich the beverage with air.

29. The extraction unit according to the preceding claim, wherein said emulsifying means comprises a plurality of point-shaped elements (30) and a plurality of passage channels (31; 48).

30. The extraction unit according to the preceding claim, wherein said point-shaped elements (30) are arranged substantially cross-like.

31. The extraction unit according to claim 29 or 30, wherein said point-shaped elements (30) and said channels (31) are arranged alternate.

32. A machine for preparing beverages such as coffee and the like from a capsule preparation (E; F; P; T) in the form of a substantially granular infusion, comprising:
• means for housing at least one extraction unit, the latter apt to receive the capsule and to allow the extracting therefrom of the related beverage;
• means (14, 16, 18) for liquid supplying, apt to provide to the extraction unit an extraction liquid passing through the capsule, wherein the overall arrangement is such that said housing means is apt to receive extraction units of different type, so as to allow, in the same machine, the use of capsules of different type;
• extraction unit that in turn comprises an element (2; 20; 27; 33; 40) for collecting the liquid beverage extracted from the capsule, apt to convey said beverage to the consumer;
said extraction unit bearing means (13) for identifying the type of capsule or capsules that is apt to receive and whereas said identifying means (13) is arranged at said collecting element (2; 20; 27; 33; 40).

33. The machine according to the preceding claim, wherein said housing means is apt to concomitantly house a plurality of extraction units, each apt to receive a
respective type of capsules.

34. The machine according to claim 32, wherein said housing means is apt to house one extraction unit at a time, said extraction unit being apt to receive a respective type of capsules.

35. The machine according to the preceding claim, wherein said housing means is apt to removably receive an extraction unit according to any one of claims 1 to 31.

36. The machine according to any one of claims 32 to 35, comprising a movable element (16), apt to assume different operative positions according to the dimensions and/or configuration of the capsule received in the extraction unit.

37. The machine according to the preceding claim, wherein said movable element (16) bears channels (17) apt to allow the passage of the extraction liquid.

38. The machine according to claim 36 or 37, wherein said movable element is in the form of a disc (16). 2

39. The machine according to any one of claims 32 to 38, comprising a punching element (14) apt to punch the capsule received in the extraction unit.

40. The machine according to the preceding claim, wherein said punching element (14) is movable, so as to assume different operative positions according to the actual need to punch the capsule and/or to the dimensions and/or configuration of the latter.

41. The machine according to claim 39 or 40, wherein said punching element (14) is hollow so as to allow the delivering of the extraction liquid therethrough.

42. The machine according to any one of claims 39 to 41, wherein said punching element (14) comprises a plurality of punches (15).

43. The machine according to any one of claims 32 to 42, comprising an extraction unit having a capsule seat (3; 21; 34; 41) apt to receive a single-dose capsule.

44. The machine according to any one of claims 32 to 43, comprising an extraction unit having a capsule seat (3; 21; 34; 41) apt to receive a disposable capsule.

45. The machine according to any one of claims 32 to 44, comprising an extraction unit having a capsule seat (3) having rounded sidewalls.

46. The machine according to any one of claims 32 to 45, comprising an extraction unit having a capsule seat (21) in turn comprising a support base of the capsule with walls substantially converging to a hole (22) for delivering the beverage extracted from the capsule itself.

47. The machine according to any one of claims 32 to 46, comprising an extraction unit having a capsule seat (21) in turn comprising a support base with a substantially conical geometry.

48. The machine according to any one of claims 32 to 47, comprising an extraction unit having a capsule seat (34) bearing a bottom abutment edge (35) onto which the capsule itself abuts.

49. The machine according to any one of claims 32 to 48, comprising an extraction unit having a capsule seat (41) of substantially tubular configuration, said capsule seat being open bottomwise and topwise.

50. The machine according to any one of claims 32 to 49, comprising an extraction unit having a capsule seat with a substantially cylindrical geometry.

51. The machine according to the preceding claim, wherein said identifying means comprises a mechanical identifier (13).

52. The machine according to claim 51, wherein said identifying means (13) comprises an electronic identifier.

53. The machine according to any one of claims 32 to 52, comprising an extraction unit that in turn comprises a capsule support (1; 19; 32; 39) apt to cooperate with said means (14, 16, 18) for supplying the extraction liquid so that said liquid may pass through the capsule.

54. The machine according to the preceding claim, wherein said capsule support (1; 19; 32; 39) is apt to be partially or totally extracted from the machine to allow the introduction of the capsule.

55. The machine according to the preceding claim, wherein said capsule support (1; 19; 32; 39) has an extraction arm (6) apt to be grabbed by the user.

56. The machine according to the preceding claim, wherein said collecting element (2; 20; 27; 33; 40) comprises a substantially funnel-shaped conveyor (10; 24; 28; 36; 42).

57. The machine according to claim 56, wherein said collecting element (2; 20; 27; 33; 40) comprises a substantially tubular conveyor (100, 11; 26, 11; 38, 11; 45, 11).

58. The machine according to any one of claims 56 or 57, wherein said collecting element (2; 20; 27; 33; 40) is apt to be removably received in the machine so as to have to be extracted only to be replaced with another analogous element suitable for use with capsules of different type.

59. The machine according to the preceding claim, wherein said collecting element (2; 20; 27; 33; 40) has a lateral appendix (12) receiving said identifying means (13).

60. The machine according to any one of claims 56 to 59 when dependent from any one of claims 53 to 55, wherein said collecting element (2; 20; 27; 33; 40) and said capsule support (1;19; 32; 39) are apt to cooperate the one with the other one for extracting the beverage and for the supplying thereof to the user, the former one being arranged or apt to be arranged bottomwise to the latter one.

61. The machine according to the preceding claim, wherein said collecting element (2; 20; 27; 33; 40) and capsule support (1; 19; 32; 39) are coupled at respective end faces.

62. The machine according to claim 60 or 61, wherein said collecting element (2; 20; 27; 33; 40) and capsule support (1; 19; 32; 39) are coupled by interposition of a sealing element (8).

63. The machine according to any one of claims 32 to 62, comprising an extraction unit which in turn comprises means (5; 23) for filtering the liquid beverage extracted from the capsule.

64. The machine according to the preceding claim, wherein said filtering means comprises a plurality of perforations (5) arranged at a support base (4) for the capsule (3).

65. The machine according to claim 63 or 64, wherein said filtering means comprises a plurality of transversal filtering channels (23) arranged at a support base for the capsule (21).

66. The machine according to the preceding claim, wherein said filtering channels (23) have a substantially radial arrangement.

67. The machine according to claim 65 or 66, wherein said filtering channels (23) have a substantially oblique development.

68. The machine according to any one of claims 63 to 67 when dependent from any one of claims 56 to 62, wherein said filtering means is arranged at said collecting element.

69. The machine according to any one of claims 32 to 68, comprising emulsifying means (29; 46) to enrich with air the beverage.

70. The machine according to the preceding claim, wherein said emulsifying means comprises a plurality of point-shaped elements (30) and a plurality of passage channels (31; 48).

71. The machine according to the preceding claim, wherein said point-shaped channels (30) are arranged substantially cross-like.

72. The machine according to claim 70 or 71, wherein said point-shaped elements (30) and said channels (31) are arranged alternate.

## Patentansprüche

1. Entnahmeeinheit zur Verwendung in einer Maschine zum Zubereiten von Getränken wie Kaffee und dgl., die geeignet ist zur Entnahme eines Getränks aus einer Kapsel (E; F; P; T), welche eine Zubereitung in Form einer im Wesentlichen granularen Infusion enthält, mit:
- einem Hauptkörper (1, 2; 19, 20; 19, 27; 32, 33; 39, 40), der einen Sitz (3; 21; 34; 41) hat, welcher geeignet ist, die Kapsel zu empfangen, wobei der Hauptkörper (1, 2; 19, 20; 19, 27; 32, 33; 39, 40) geeignet ist, in ein entsprechendes Gehäuse der Maschine entnehmbar eingeführt zu werden, so dass eine Entnahmeflüssigkeit wie Wasser od. dgl., welche durch die Maschine selbst geliefert wird, durch die Kapsel hindurchgehen kann, wobei der Hauptkörper ein Sammelelement (2; 20; 27; 33; 40) aufweist zum Sammeln des flüssigen Getränks, das aus der Kapsel entnommen wird, welches geeignet ist, das Getränk zu einem Verbraucher zu fördern; und
- einer Einrichtung (13) zum Identifizieren des Typs von Kapsel oder Kapseln, den die Einheit zu empfangen in der Lage ist, wobei die Identifiziereinrichtung (13) an dem Sammelelement (2; 20; 27; 33; 40) angeordnet ist,
wobei die Einheit auswechselbar ist, um so die Verwendung von Kapseln unterschiedlichen Typs in ein und derselben Maschine zu erlauben.

2. Entnahmeeinheit nach Anspruch 1, wobei der Kapselsitz (3; 21; 34; 41) geeignet ist, eine Einzeldosiskapsel zu empfangen.

3. Entnahmeeinheit nach Anspruch 1 oder 2, wobei der Kapselsitz (3; 21; 34; 41) geeignet ist, eine Einwegkapsel zu empfangen.

4. Entnahmeeinheit nach einem der vorhergehenden Ansprüche, wobei der Kapselsitz (3) abgerundete Seitenwände hat.

5. Entnahmeeinheit nach einem der vorhergehenden Ansprüche, wobei der Kapselsitz (21) eine Tragbasis der Kapsel mit Wänden hat, welche zu einem Abgabeloch (22) zum Liefern des durch die Kapsel selbst entnommenen Getränks hin im Wesentlichen konvergieren.

6. Entnahmeeinheit nach einem der vorhergehenden Ansprüche, wobei der Kapselsitz (21) eine Tragbasis der Kapsel mit einer im Wesentlichen konischen Geometrie hat.

7. Entnahmeeinheit nach einem der vorhergehenden Ansprüche, wobei der Kapselsitz (34) einen unteren Auflagerand (35) hat, auf dem die Kapsel selbst zu liegen kommt.

8. Entnahmeeinheit nach einem der vorhergehenden Ansprüche, wobei der Kapselsitz (41) eine im Wesentlichen rohrförmige Konfiguration hat, die unten und oben offen ist.

9. Entnahmeeinheit nach einem der vorhergehenden Ansprüche, wobei der Kapselsitz (41) eine im Wesentlichen zylindrische Geometrie hat.

10. Entnahmeeinheit nach einem der vorhergehenden Ansprüche, wobei die Identifiziereinrichtung einen mechanischen Identifizierer (13) umfasst.

11. Entnahmeeinheit nach einem der vorhergehenden Ansprüche, wobei die Identifiziereinrichtung (13) einen elektronischen Identifizierer umfasst.

12. Entnahmeeinheit nach einem der vorhergehenden Ansprüche, wobei der Hauptkörper einen Kapselträger (1; 19; 32; 39) aufweist, der den Kapselsitz (3; 21; 34; 41) hat und geeignet ist, mit einer Einrichtung (14; 16; 18) zum Liefern der Entnahmeflüssigkeit der Maschine so zusammenzuwirken, dass die Flüssigkeit durch die Kapsel hindurchgehen kann.

13. Entnahmeeinheit nach dem vorhergehenden Anspruch, wobei der Kapselträger (1; 19; 32; 39) geeignet ist, teilweise oder vollständig aus der Maschine entnommen zu werden, um das Einführen der Kapsel zu erlauben.

14. Entnahmeeinheit nach dem vorhergehenden Anspruch, wobei der Kapselträger (1; 19; 32; 39) einen Entnahmearm (6) hat, welcher geeignet ist, durch eine Benutzer ergriffen zu werden.

15. Entnahmeeinheit nach einem der vorhergehenden Ansprüche, wobei das Sammelelement (2; 20; 27; 33; 40) einen im Wesentlichen trichterförmigen Förderer (10; 24; 28; 36; 42) umfasst.

16. Entnahmeeinheit nach einem der vorhergehenden Ansprüche, wobei das Sammelelement (2; 20; 27; 33; 40) einen im Wesentlichen rohrförmigen Förderer (100, 11; 26, 11; 38, 11; 45, 11) umfasst.

17. Entnahmeeinheit nach einem der vorhergehenden Ansprüche, wobei das Sammelelement (2; 20; 27; 33; 40) geeignet ist, in der Maschine entnehmbar aufgenommen zu werden, so dass es nur entnommen zu werden braucht, um gegen ein anderes analoges Element ausgetauscht zu werden, welches zur Verwendung mit Kapseln eines anderen Typs geeignet ist.

18. Entnahmeeinheit nach einem der vorhergehenden Ansprüche, wobei das Sammelelement (2; 20; 27; 33; 40) einen seitlichen Fortsatz (12) hat, welcher die Identifiziereinrichtung (13) empfängt.

19. Entnahmeeinheit nach einem der Ansprüche 13 bis 15, wobei das Sammelelement (2; 20; 27; 33; 40) und der Kapselträger (1; 19; 32; 39) geeignet sind, miteinander zusammenzuwirken, um das Getränk zu entnehmen, und um dasselbe dem Benutzer zu liefern, wobei ersteres unten an dem letzteren angeordnet ist oder geeignet ist, unten an dem letzteren angeordnet zu werden.

20. Entnahmeeinheit nach dem vorhergehenden Anspruch, wobei das Sammelelement (2; 20; 27; 33; 40) und der Kapselträger (1; 19; 32; 39) an ihren Stirnflächen gekuppelt sind.

21. Entnahmeeinheit nach Anspruch 19 oder 20, wobei das Sammelelement (2; 20; 27; 33; 40) und der Kapselträger (1; 19; 32; 39) unter Zwischenschaltung eines Dichtelements (8) gekuppelt sind.

22. Entnahmeeinheit nach einem der vorhergehenden Ansprüche, mit einer Einrichtung (5; 23) zum Filtern des flüssigen Getränks, das aus der Kapsel entnommen wird.

23. Entnahmeeinheit nach dem vorhergehenden Anspruch, wobei die Filtereinrichtung eine Vielzahl von Perforationen (5) aufweist, die in einer Tragbasis (4) des Kapselsitzes (3) angeordnet sind.

24. Entnahmeeinheit nach Anspruch 22 oder 23, wobei die Filtereinrichtung eine Vielzahl von transversalen Filterkanälen (23) aufweist, die in einer Basis des Kapselsitzes (21) angeordnet sind.

25. Entnahmeeinheit nach dem vorhergehenden Anspruch, wobei die Filterkanäle (23) eine im Wesentlichen radiale Anordnung haben.

26. Entnahmeeinheit nach Anspruch 24 oder 25, wobei die Filterkanäle (23) einen im Wesentlichen schrägen Verlauf haben.

27. Entnahmeeinheit nach einem der Ansprüche 22 bis 26, wobei die Filtereinrichtung in dem Sammelelement angeordnet ist.

28. Entnahmeeinheit nach einem der vorhergehenden Ansprüche, mit einer Emulgiereinrichtung (29; 46) zum Anreichern des Getränks mit Luft.

29. Entnahmeeinheit nach dem vorhergehenden Anspruch, wobei die Emulgiereinrichtung eine Vielzahl von spitzenförmigen Elementen (30) und eine Vielzahl von Durchlasskanälen (31; 48) aufweist.

30. Entnahmeeinheit nach dem vorhergehenden Anspruch, wobei die spitzenförmigen Elemente (30) im Wesentlichen kreuzartig angeordnet sind.

31. Entnahmeeinheit nach Anspruch 29 oder 30, wobei die spitzenförmigen Elemente (30) und die Kanäle (31) abwechselnd angeordnet sind.

32. Maschine zum Zubereiten von Getränken wie Kaffee und dgl. aus einer Kapselzubereitung (E; F; P; T) in Form einer im Wesentlichen granularen Infusion, mit:
• einer Einrichtung zum Aufnehmen von wenigstens einer Entnahmeeinheit, wobei letztere geeignet ist, die Kapsel zu empfangen, und das Entnehmen des entsprechenden Getränks aus derselben zu erlauben;
• einer Einrichtung (14; 16; 18) zum Liefern von Flüssigkeit, die geeignet ist, die Entnahmeeinheit mit einer Entnahmeflüssigkeit zu versorgen, welche durch die Kapsel hindurchgeht, wobei die Gesamtanordnung so getroffen ist, dass die Gehäuseeinrichtung geeignet ist, Entnahmeeinheiten unterschiedlichen Typs zu empfangen, um so die Verwendung von Kapseln unterschiedlichen Typs in ein und derselben Maschine zu erlauben;
• einer Entnahmeeinheit, die ihrerseits ein Element (2; 20; 27; 33; 40) zum Sammeln des aus der Kapsel entnommenen flüssigen Getränks aufweist, welches geeignet ist, das Getränk zu dem Verbraucher zu fördern;
wobei die Entnahmeeinheit eine Einrichtung (13) trägt zum Identifizieren des Typs von Kapsel oder Kapseln, der geeignet ist, empfangen zu werden, und wobei die Identifiziereinrichtung (13) an dem Sammelelement (2; 20; 27; 33; 40) angeordnet ist.

33. Maschine nach dem vorhergehenden Anspruch, wobei die Gehäuseeinrichtung geeignet ist, mehrere Entnahmeeinheiten gleichzeitig aufzunehmen, von denen jede geeignet ist, einen entsprechenden Typ von Kapseln zu empfangen.

34. Maschine nach Anspruch 32, wobei die Gehäuseeinrichtung geeignet ist, eine Entnahmeeinheit gleichzeitig aufzunehmen, und wobei die Entnahmeeinheit geeignet ist, einen entsprechenden Typ von Kapseln zu empfangen.

35. Maschine nach dem vorhergehenden Anspruch, wobei die Gehäuseeinrichtung geeignet ist, eine Entnahmeeinheit nach einem der Ansprüche 1 bis 31 entnehmbar aufzunehmen.

36. Maschine nach einem der Ansprüche 32 bis 35, mit einem beweglichen Element (16), das geeignet ist, unterschiedliche Betriebspositionen gemäß den Abmessungen und/oder der Konfiguration der in der Entnahmeeinheit empfangenen Kapsel einzunehmen.

37. Maschine nach dem vorhergehenden Anspruch, wobei das bewegliche Element (16) Kanäle (17) trägt, die geeignet sind, den Durchlass der Entnahmeflüssigkeit zu erlauben.

38. Maschine nach Anspruch 36 oder 37, wobei das bewegliche Element die Form einer Scheibe (16) hat.

39. Maschine nach einem der Ansprüche 32 bis 38, mit einem Stanzelement (14), das geeignet ist, die in der Entnahmeeinheit empfangene Kapsel durchzustanzen.

40. Maschine nach dem vorhergehenden Anspruch, wobei das Stanzelement (14) beweglich ist, so dass es verschiedene Betriebspositionen gemäß dem aktuellen Bedarf einnehmen kann, um die Kapsel zu durchstanzen, und/oder gemäß den Abmessungen und/oder der Konfiguration von letzterer.

41. Maschine nach Anspruch 39 oder 40, wobei das Stanzelement (14) hohl ist, um zu erlauben, dass die Entnahmeflüssigkeit hindurchgeleitet werden kann.

42. Maschine nach einem der Ansprüche 39 bis 41, wobei das Stanzelement (14) eine Vielzahl von Stanzstempeln (15) aufweist.

43. Maschine nach einem der Ansprüche 32 bis 42, mit einer Entnahmeeinheit, die einen Kapselsitz (3; 21; 34; 41) hat, der geeignet ist, eine Einzeldosiskapsel zu empfangen.

44. Maschine nach einem der Ansprüche 32 bis 43, mit einer Entnahmeeinheit, die einen Kapselsitz (3; 21, 34; 41) hat, der geeignet ist, eine Einwegkapsel zu empfangen.

45. Maschine nach einem der Ansprüche 32 bis 44, mit einer Entnahmeeinheit, die einen Kapselsitz (3) hat, welcher abgerundete Seitenwände aufweist.

46. Maschine nach einem der Ansprüche 32 bis 45, mit einer Entnahmeeinheit, die einen Kapselsitz (21) hat, der seinerseits eine Tragbasis der Kapsel mit Wänden aufweist, die zu einem Loch (22) zum Liefern des aus der Kapsel selbst entnommenen Getränks im Wesentlichen konvergieren.

47. Maschine nach einem der Ansprüche 32 bis 46, mit einer Entnahmeeinheit, die einen Kapselsitz (21) hat, der seinerseits eine Tragbasis mit einer im Wesentlichen konischen Geometrie aufweist.

48. Maschine nach einem der Ansprüche 32 bis 47, mit einer Entnahmeeinheit, die einen Kapselsitz (34) hat, der einen unteren Anschlagrand (35) trägt, auf dem die Kapsel selbst zu liegen kommt.

49. Maschine nach einem der Ansprüche 32 bis 48, mit einer Entnahmeeinheit, die einen Kapselsitz (41) hat, welcher eine im Wesentlichen rohrförmige Konfiguration hat, wobei der Kapselsitz unten und oben offen ist.

50. Maschine nach einem der Ansprüche 32 bis 49, mit einer Entnahmeeinheit, die einen Kapselsitz mit einer im Wesentlichen zylindrischen Geometrie hat.

51. Maschine nach dem vorhergehenden Anspruch, wobei die Identifiziereinrichtung einen mechanischen Identifizierer (13) aufweist.

52. Maschine nach Anspruch 51, wobei die Identifiziereinrichtung (13) einen elektronischen Identifizierer umfasst.

53. Maschine nach einem der Ansprüche 32 bis 52, mit einer Entnahmeeinheit, die ihrerseits einen Kapselträger (1; 19; 32; 39) aufweist, der geeignet ist, mit der Einrichtung (14; 16; 18) zum Liefern der Entnahmeflüssigkeit so zusammenzuwirken, dass die Flüssigkeit durch die Kapsel hindurchgehen kann.

54. Maschine nach dem vorhergehenden Anspruch, wobei der Kapselträger (1; 19; 32; 39) geeignet ist, teilweise oder vollständig aus der Maschine entnommen zu werden, um das Einführen der Kapsel zu erlauben.

55. Maschine nach dem vorhergehenden Anspruch, wobei der Kapselträger (1; 19; 32; 39) einen Entnahmearm (6) hat, welcher geeignet ist, durch den Benutzer ergriffen zu werden.

56. Maschine nach dem vorhergehenden Anspruch, wobei das Sammelelement (2; 20; 27; 33; 40) einen im Wesentlichen trichterförmigen Förderer (10; 24; 28; 36; 42) aufweist.

57. Maschine nach Anspruch 56, wobei das Sammelelement (2; 20; 27; 33; 40) einen im Wesentlichen rohrförmigen Förderer (100,11; 26, 11; 38, 11; 45, 11) umfasst.

58. Maschine nach einem der Ansprüche 56 oder 57, wobei das Sammelelement (2; 20; 27; 33; 40) geeignet ist, in der Maschine entnehmbar aufgenommen zu werden, so dass es nur entnommen zu werden braucht, um gegen ein anderes analoges Element ausgetauscht zu werden, welches für den Gebrauch mit Kapseln anderen Typs geeignet ist.

59. Maschine nach dem vorhergehenden Anspruch, wobei das Sammelelement (2; 20; 27; 33; 40) einen seitlichen Fortsatz (12) hat, welcher die Identifiziereinrichtung (13) empfängt.

60. Maschine nach einem der Ansprüche 56 bis 59, wenn abhängig von einem der Ansprüche 53 bis 55, wobei das Sammelelement (2; 20; 27; 33; 40) und der Kapselträger (1; 19; 32; 39) geeignet sind, miteinander zusammenzuwirken zum Entnehmen des Getränks und zum Liefern desselben an den Benutzer, wobei ersteres unter letzterem angeordnet ist, oder wobei ersteres geeignet ist, unter letzterem angeordnet zu werden.

61. Maschine nach dem vorhergehenden Anspruch, wobei das Sammelelement (2; 20; 27; 33; 40) und der Kapselträger (1; 19; 32; 39) an ihren Stirnflächen gekuppelt sind.

62. Maschine nach Anspruch 60 oder 61, wobei das Sammelelement (2; 20; 27; 33; 40) und der Kapselträger (1; 19; 32; 39) unter Zwischenschaltung eines Dichtelements (8) gekuppelt sind.

63. Maschine nach einem der Ansprüche 32 bis 62, mit einer Entnahmeeinheit, die ihrerseits eine Einrichtung (5; 23) zum Filtern des aus der Kapsel entnommenen Getränks aufweist.

64. Maschine nach dem vorhergehenden Anspruch, wobei die Filtereinrichtung eine Vielzahl von Perforationen (5) aufweist, die in einer Tragbasis (4) für die Kapsel (3) angeordnet sind.

65. Maschine nach Anspruch 63 oder 64, wobei die Filtereinrichtung eine Vielzahl von transversalen Filterkanälen (23) aufweist, die in einer Tragbasis für die Kapsel (21) angeordnet sind.

66. Maschine nach dem vorhergehenden Anspruch, wobei die Filterkanäle (23) eine im Wesentlichen radiale Anordnung haben.

67. Maschine nach Anspruch 65 oder 66, wobei die Filterkanäle (23) einen im Wesentlichen schrägen Verlauf haben.

68. Maschine nach einem der Ansprüche 63 bis 67, wenn abhängig von einem der Ansprüche 56 bis 62, wobei die Filtereinrichtung in dem Sammelelement angeordnet ist.

69. Maschine nach einem der Ansprüche 32 bis 68, mit einer Emulgiereinrichtung (29; 46) zum Anreichern des Getränks mit Luft.

70. Maschine nach dem vorhergehenden Anspruch, wobei die Emulgiereinrichtung eine Vielzahl von spitzenförmigen Elementen (30) und eine Vielzahl von Durchlasskanälen (31, 48) aufweist.

71. Maschine nach dem vorhergehenden Anspruch, wobei die spitzenförmigen Kanäle (30) im Wesentlichen kreuzartig angeordnet sind.

72. Maschine nach Anspruch 70 oder 71, wobei die spitzenförmigen Elemente (30) und die Kanäle (31) abwechselnd angeordnet sind.

## Revendications

1. Ensemble d'extraction destiné à être utilisé dans une machine de préparation de boissons telles que le café et de boissons similaires, apte à l'extraction d'une boisson à partir d'une capsule (E ; F ; P ; T) contenant une préparation se présentant sous la forme d'une infusion substantiellement granulaire comprenant :
- un corps principal (1, 2 ; 19, 20 ; 19, 27 ; 32, 33 ; 39, 40) comportant un siège (3 ; 21 ; 34 ; 41) apte à recevoir la capsule, lequel corps principal (1, 2 ; 19, 20 ; 19, 27 ; 32, 33 ; 39, 40) est apte à être introduit de manière amovible dans un logement correspondant de la machine de telle manière qu'un liquide d'extraction tel que l'eau, ou un liquide similaire, délivré par la machine elle-même peut passer à travers la capsule, lequel corps principal comprend un élément de collecte (2 ; 20 ; 27 ; 33 ; 40) destiné à recueillir la boisson liquide extraite de la capsule, apte à amener ledit breuvage jusqu'à un consommateur ; et
- un moyen (13) d'identification du type de capsule ou de capsules que l'ensemble est apte à recevoir, lequel moyen d'identification (13) est agencé sur ledit l'élément de collecte (2 ; 20 ; 27 ; 33 ; 40),
ledit ensemble étant interchangeable de manière à permettre l'utilisation de capsules de types différents dans une même machine.

2. Ensemble d'extraction selon la revendication 1 dans lequel ledit siège pour capsule (3 ; 21 ; 34 ; 41) est apte à recevoir une capsule contenant une dose unique.

3. Ensemble d'extraction selon la revendication 1 ou 2 dans lequel ledit siège pour capsule (3 ; 21 ; 34 ; 41) est apte à recevoir une capsule jetable.

4. Ensemble d'extraction selon l'une quelconque des revendications qui précèdent dans lequel ledit siège pour capsule (3) présente des parois latérales arrondies.

5. Ensemble d'extraction selon l'une quelconque des revendications qui précèdent dans lequel ledit siège pour capsule (21) comporte une base de support de la capsule dont les parois convergent substantiellement en direction d'un orifice de distribution (22) destiné à délivrer la boisson extraite par la capsule elle-même.

6. Ensemble d'extraction selon l'une quelconque des revendications qui précèdent dans lequel ledit siège pour capsule (21) comporte une base de support de la capsule dotée d'une géométrie substantiellement conique.

7. Ensemble d'extraction selon l'une quelconque des revendications qui précèdent dans lequel ledit siège pour capsule (34) est doté d'un bord de butée inférieur (35) sur lequel la capsule elle-même vient en butée.

8. Ensemble d'extraction selon l'une quelconque des revendications qui précèdent dans lequel ledit siège pour capsule (41) a une configuration substantiellement tubulaire, en étant ouvert en bas et en haut.

9. Ensemble d'extraction selon l'une quelconque des revendications qui précèdent dans lequel ledit siège pour capsule (41) a une géométrie substantiellement cylindrique.

10. Ensemble d'extraction selon l'une quelconque des revendications qui précèdent dans lequel ledit moyen d'identification comprend un élément d'identification mécanique (13).

11. Ensemble d'extraction selon l'une quelconque des revendications qui précèdent dans lequel ledit moyen d'identification (13) comprend un élément d'identification électronique.

12. Ensemble d'extraction selon l'une quelconque des revendications qui précèdent dans lequel ledit corps principal comprend un support de capsule (1 ; 19 ; 32 ; 39) qui comporte ledit siège pour capsule (3 ; 21 ; 34 ; 41) et est apte à coopérer avec un moyen (14, 16, 18) de distribution du liquide d'extraction de la machine de telle manière que ledit liquide puisse passer à travers la capsule.

13. Ensemble d'extraction selon la revendication qui précède dans lequel ledit support de capsule (1 ; 19 ; 32 ; 39) est apte à être partiellement ou totalement extrait de la machine en vue de permettre l'introduction de la capsule.

14. Ensemble d'extraction selon la revendication qui précède dans lequel ledit support de capsule (1 ; 19 ; 32 ; 39) comporte un bras d'extraction (6) apte à être saisi par un utilisateur.

15. Ensemble d'extraction selon l'une quelconque des revendications qui précèdent dans lequel ledit élément de collecte (2 ; 20 ; 27 ; 33 ; 40) comprend un élément de transport (10 ; 24 ; 28 ; 36 ; 42) substantiellement en forme de cheminée.

16. Ensemble d'extraction selon l'une quelconque des revendications qui précèdent dans lequel ledit élément de collecte (2 ; 20 ; 27 ; 33 ; 40) comprend un élément de transport (100 ; 11 ; 26 ; 11 ; 38 ; 11 ; 45 ; 11) substantiellement tubulaire.

17. Ensemble d'extraction selon l'une quelconque des revendications qui précèdent dans lequel ledit élément de collecte (2 ; 20 ; 27 ; 33 ; 40) est apte à être reçu de manière amovible dans la machine de façon à devoir être extrait uniquement pour être remplacé par un autre élément analogue convenable pour être utilisé avec des capsules d'un type différent.

18. Ensemble d'extraction selon l'une quelconque des revendications qui précèdent dans lequel ledit élément de collecte (2 ; 20 ; 27 ; 33 ; 40) comporte un appendice latéral (12) recevant ledit moyen d'identification (13).

19. Ensemble d'extraction selon l'une quelconque des revendications 13 à 15 dans lequel ledit élément de collecte (2 ; 20 ; 27 ; 33 ; 40) et ledit support de capsule (1 ; 19 ; 32 ; 39) sont aptes à coopérer l'un avec l'autre en vue d'extraire la boisson et de fournir celle-ci à l'utilisateur, le premier étant agencé ou apte à être agencé par sa base sur le dernier.

20. Ensemble d'extraction selon la revendication qui précède dans lequel ledit élément de collecte (2 ; 20 ; 27 ; 33 ; 40) et le support de capsule (1 ; 19 ; 32 ; 39) sont accouplés par leurs faces d'extrémité respectives.

21. Ensemble d'extraction selon la revendication 19 ou 20 dans lequel ledit élément de collecte (2 ; 20 ; 27 ; 33 ; 40) et le support de capsule (1 ; 19 ; 32 ; 39) sont accouplés avec interposition d'un élément formant joint (8).

22. Ensemble d'extraction selon l'une quelconque des revendications qui précèdent, comprenant un moyen (5 ; 23) de filtration de la boisson liquide extraite de la capsule.

23. Ensemble d'extraction selon la revendication qui précède dans lequel le moyen de filtration comprend une pluralité de perforations (5) agencées sur une base de support (4) dudit siège pour capsule (3).

24. Ensemble d'extraction selon la revendication 22 ou 23 dans lequel ledit moyen de filtration comprend une pluralité de canaux de filtration transversaux (23) agencés sur la base dudit siège pour capsule (21).

25. Ensemble d'extraction selon la revendication qui précède dans lequel lesdits canaux de filtration (23) sont agencés substantiellement radialement.

26. Ensemble d'extraction selon la revendication 24 ou 25 dans lequel lesdits canaux de filtration (23) se développent substantiellement obliquement.

27. Ensemble d'extraction selon l'une quelconque des revendications 22 à 26 dans lequel ledit moyen de filtration est agencé sur ledit élément de collecte.

28. Ensemble d'extraction selon l'une quelconque des revendications qui précèdent, comprenant un moyen d'émulsification (29 ; 46) destiné à enrichir la boisson avec de l'air.

29. Ensemble d'extraction selon la revendication qui précède dans lequel ledit moyen d'émulsification comprend une pluralité d'éléments en forme de pointes (30) et une pluralité de canaux de passage (31 ; 48).

30. Ensemble d'extraction selon la revendication qui précède dans lequel lesdits éléments en forme de pointes (30) sont agencés substantiellement en croix.

31. Ensemble d'extraction selon la revendication 29 ou 30 dans lequel lesdits éléments en forme de pointes (30) et lesdits canaux (31) sont agencés de façon alternée.

32. Machine de préparation de boissons tels que du café et de boissons similaires à partir d'une préparation en capsule (E ; F ; P ; T) sous forme d'une infusion substantiellement granulaire, comprenant :
- un moyen destiné à loger au moins un ensemble d'extraction, ce dernier étant apte à recevoir la capsule et à permettre l'extraction de la boisson en question à partir de celle-ci ;
- un moyen (14, 16, 18) destiné à fournir un liquide apte à délivrer à l'ensemble d'extraction un liquide d'extraction qui passe à travers la capsule, l'agencement général étant tel que ledit moyen de logement est apte à recevoir des ensembles d'extraction de type différent, de manière à permettre d'utiliser des capsules de type différent dans la même machine ;
- ensemble d'extraction qui, à son tour, comprend un élément (2 ; 20 ; 27 ; 33 ; 40) destiné à collecter la boisson liquide extraite de la capsule, apte à amener ladite boisson au consommateur, ledit ensemble d'extraction comportant un moyen (13) d'identification du type de capsule ou de capsules qu'il est apte à recevoir et ledit moyen d'identification (13) étant agencé sur ledit élément de collecte (2 ; 20 ; 27 ; 33 ; 40).

33. Machine selon la revendication qui précède dans laquelle ledit moyen de logement est apte à loger concomitamment une pluralité d'ensembles d'extraction, aptes chacun à recevoir un type de capsule respectif.

34. Machine selon la revendication 32 dans laquelle ledit moyen de logement est apte à loger un seul ensemble d'extraction à la fois, ledit ensemble d'extraction étant apte à recevoir un type respectif de capsule.

35. Machine selon la revendication qui précède dans laquelle ledit moyen de logement est apte à recevoir de manière amovible un ensemble d'extraction selon l'une quelconque des revendications 1 à 31.

36. Machine selon l'une quelconque des revendications 32 à 35, comprenant un élément mobile (16) apte à adopter différentes positions de fonctionnement selon les dimensions et/ou la configuration de la capsule reçue dans l'ensemble d'extraction.

37. Machine selon la revendication qui précède dans laquelle ledit élément mobile (16) comporte des canaux (17) aptes à permettre le passage du liquide d'extraction.

38. Machine selon la revendication 36 ou 37 dans laquelle ledit élément mobile a la forme d'un disque (16).

39. Machine selon l'une quelconque des revendications 32 à 38, comprenant un élément de poinçonnage (14) apte à poinçonner la capsule reçue dans l'ensemble d'extraction.

40. Machine selon la revendication qui précède dans laquelle ledit élément de poinçonnage (14) est mobile de manière à adopter des positions de fonctionnement différentes selon le besoin réel de poinçonner la capsule et/ou selon les dimensions et/ou la configuration de cette dernière.

41. Machine selon la revendication 39 ou 40 dans laquelle ledit élément de poinçonnage (14) est creux, de manière à permettre à travers lui la délivrance du liquide d'extraction.

42. Machine selon l'une quelconque des revendications 39 à 41 dans laquelle ledit élément de poinçonnage (14) comprend une pluralité de poinçons (15).

43. Machine selon l'une quelconque des revendications 32 à 42, comprenant un ensemble d'extraction doté d'un siège pour capsule (3 ; 21 ; 34 ; 41) apte à recevoir une capsule contenant une dose unique.

44. Machine selon l'une quelconque des revendications 32 à 43, comprenant un ensemble d'extraction doté d'un siège pour capsule (3 ; 21 ; 34 ; 41) apte à recevoir une capsule jetable.

45. Machine selon l'une quelconque des revendications 32 à 44, comprenant un ensemble d'extraction doté d'un siège pour capsule (3) comportant des parois latérales arrondies.

46. Machine selon l'une quelconque des revendications 32 à 45, comprenant un ensemble d'extraction doté d'un siège pour capsule (21) comprenant à son tour une base de support de la capsule dont les parois convergent substantiellement vers un orifice (22) en vue de délivrer la boisson extraite de la capsule elle-même.

47. Machine selon l'une quelconque des revendications 32 à 46, comprenant un ensemble d'extraction doté d'un siège pour capsule (21) comprenant à son tour une base de support présentant une géométrie substantiellement conique.

48. Machine selon l'une quelconque des revendications 32 à 47, comprenant un ensemble d'extraction doté d'un siège pour capsule (34) comportant un bord de butée inférieur (35) sur lequel la capsule elle-même vient en butée.

49. Machine selon l'une quelconque des revendications 32 à 48, comprenant un ensemble d'extraction doté d'un siège pour capsule (41) présentant une configuration substantiellement tubulaire, ledit siège pour capsule étant ouvert à la base et au sommet.

50. Machine selon l'une quelconque des revendications 32 à 49, comprenant un ensemble d'extraction doté d'un siège pour capsule présentant une géométrie substantiellement cylindrique.

51. Machine selon la revendication qui précède dans laquelle ledit moyen d'identification comprend un élément d'identification mécanique (13).

52. Machine selon la revendication 51 dans laquelle ledit moyen d'identification (13) comprend un élément d'identification électronique.

53. Machine selon l'une quelconque des revendications 32 à 52, comprenant un ensemble d'extraction qui à son tour comprend un support de capsule (1 ; 19 ; 32 ; 39) apte à coopérer avec ledit moyen (14, 16, 18) pour fournir le liquide d'extraction de telle manière que ledit liquide puisse traverser la capsule.

54. Machine selon la revendication qui précède dans laquelle ledit support de capsule (1 ; 19 ; 32 ; 39) est apte à être partiellement ou totalement extrait de la machine pour permettre l'introduction de la capsule.

55. Machine selon la revendication qui précède dans laquelle ledit support de capsule (1 ; 19 ; 32 ; 39) comporte un bras d'extraction (6) apte à être saisi par l'utilisateur.

56. Machine selon la revendication qui précède dans laquelle ledit élément de collecte (2 ; 20 ; 27 ; 33 ; 40) comprend un dispositif de transport substantiellement en forme de cheminée (10 ; 24 ; 28 ; 36 ; 42).

57. Machine selon la revendication 56 dans laquelle ledit élément de collecte (2 ; 20 ; 27 ; 33 ; 40) comprend un dispositif de transport substantiellement tubulaire (100, 11 ; 26, 11 ; 38, 11 ; 45, 11).

58. Machine selon l'une quelconque des revendications 56 ou 57 dans laquelle ledit élément de collecte (2 ; 20 ; 27 ; 33 ; 40) est apte à être reçu de manière amovible dans la machine de façon à ne devoir être extrait que pour être remplacé par un autre élément analogue convenable pour être utilisé avec des capsules d'un type différent.

59. Machine selon la revendication qui précède dans laquelle ledit élément de collecte (2 ; 20 ; 27 ; 33 ; 40) comporte un appendice latéral (12) qui reçoit ledit moyen d'identification (13).

60. Machine selon l'une quelconque des revendications 56 à 59 lorsqu'elle dépend de l'une quelconque des revendications 53 à 55 dans laquelle ledit élément de collecte (2 ; 20 ; 27 ; 33 ; 40) et ledit support de capsule (1 ; 19 ; 32 ; 39) sont aptes à coopérer l'un avec l'autre afin d'extraire la boisson et de la fournir à l'utilisateur, le premier étant agencé ou apte à être agencé par sa base sur le dernier.

61. Machine selon la revendication qui précède dans laquelle l'élément de collecte (2 ; 20 ; 27 ; 33 ; 40) et le support de capsule (1 ; 19 ; 32 ; 39) sont accouplés au niveau de leurs faces d'extrémité respectives.

62. Machine selon la revendication 60 ou 61 dans laquelle ledit élément de collecte (2 ; 20 ; 27 ; 33 ; 40) et le support de capsule (1 ; 19 ; 32 ; 39) sont accouplés avec interposition d'un élément formant joint (8).

63. Machine selon l'une quelconque des revendications 32 à 63, comprenant un ensemble d'extraction qui à son tour comprend un moyen (5 ; 23) de filtration de la boisson liquide extraite de la capsule.

64. Machine selon la revendication qui précède dans laquelle ledit moyen de filtration comprend une pluralité de perforations (5) agencées sur une base de support (4) destinée à la capsule (3).

65. Machine selon la revendication 63 ou 64 dans laquelle ledit moyen de filtration comprend une pluralité de canaux de filtration transversaux (23) agencés sur une base de support destinée à la capsule (21).

66. Machine selon la revendication qui précède dans laquelle lesdits canaux de filtration (23) sont agencés substantiellement radialement.

67. Machine selon la revendication 65 ou 66 dans laquelle lesdits canaux de filtration (23) ont un développement substantiellement oblique.

68. Machine selon l'une quelconque des revendications 63 à 67 lorsqu'elle dépend de l'une quelconque des revendications 56 à 62 dans laquelle ledit moyen de filtration est agencé sur ledit élément de collecte.

69. Machine selon l'une quelconque des revendications 32 à 68, comprenant un moyen d'émulsification (29 ; 46) destiné à enrichir la boisson avec de l'air.

70. Machine selon la revendication qui précède dans laquelle ledit moyen d'émulsification comprend une pluralité d'éléments en forme de pointes (30) et une pluralité de canaux de passage (31 ; 48).

71. Machine selon la revendication qui précède dans laquelle lesdits éléments en forme de pointes (30) sont agencés substantiellement en croix.

72. Machine selon la revendication 70 ou 71 dans laquelle lesdits éléments en forme de pointes (30) et lesdits canaux (31) sont agencés de façon alternée.
